# EUROPEAN PATENT SPECIFICATION

(11) **EP 2 902 922 B1**
(45) Date of publication and mention of the grant of the patent: **22.02.2017**
(21) Application number: 13841208.5
(22) Date of filing: 29.09.2013
(51) Int. Cl.: G06F 17/30, G06F 11/16, G06F 11/20, G06F 11/14

(54) **DISTRIBUTED FILE SYSTEM AND DATA BACKUP METHOD FOR DISTRIBUTED FILE SYSTEM**
VERTEILTES DATEISYSTEM UND DATENSICHERUNGSVERFAHREN FÜR DAS VERTEILTE DATEISYSTEM
SYSTÈME DE FICHIERS DISTRIBUÉ ET PROCÉDÉ DE SAUVEGARDE DE DONNÉES POUR SYSTÈME DE FICHIERS DISTRIBUÉ

(30) Priority: 29.09.2012 CN 201210376301
(43) Date of publication of application: 05.08.2015
(73) Proprietor: ZTE Corporation, Shenzhen, Guangdong 518057 (CN)
(72) Inventor: OUYANG, Wei, Shenzhen Guangdong Province 518057 (CN)
(74) Representative: Novagraaf Technologies
(86) International application number: PCT/CN2013/084645
(87) International publication number: WO 2014/048396

(56) References cited:
- EP-A1- 2 330 519
- CN-A- 101 334 797
- CN-A- 101 520 805
- CN-A- 102 122 306
- CN-A- 102 890 716
- US-A1- 2003 135 514
- US-A1- 2007 198 700
- US-B1- 7 650 341

## Description

### Technical Field

The present invention relates to the field of communications, and in particular to a distributed file system and a data backup method for the distributed file system.

### Background

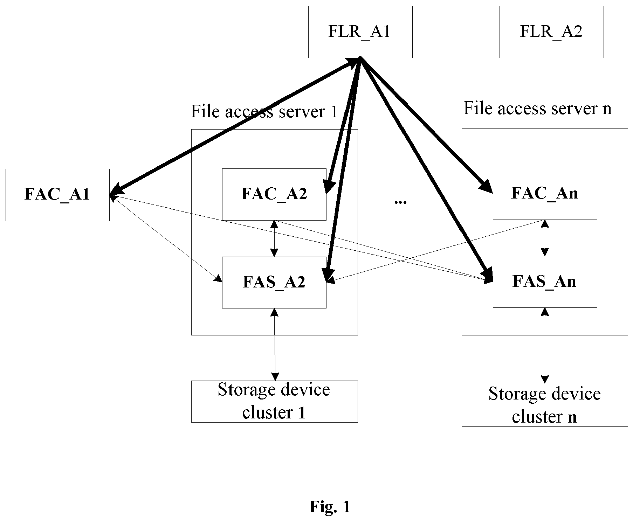

A distributed file system involved in the field of cloud storage is different from an ordinary file system in that the distributed file system also stores metadata identifying the location of the copy where the data is located in addition to store actual data. This means that a traditional method which only backs up the actual data is not applicable to a distributed file system. Taking data block information as an example, magnetic disk information and storage node information are identified on the data block information and the magnetic disk information is unique, and if a disaster occurs in a machine room at location A, even if the data block information and the data are both backed up at location B, a matching magnetic disk cannot be found, i.e. the backup of the metadata is invalid. As a result, the distributed file system can only use its own internal backup mechanism to back up the metadata and actual data. Fig. 1 shows a schematic diagram of the architecture of a distributed file system in the related technologies, where the thick solid line in Fig. 1 represents the transmission of a control stream, and the thin solid line represents the transmission of a data stream. Each device in Fig. 1 is described as follows.

The file location register (FLR), i.e. a metadata server, is responsible for managing metadata information, such as file names of all files in the present file system and data blocks, and providing operations such as metadata writing and querying to a file access client (FAC).

The FAC is responsible for providing, for an application program to which the present file system is oriented, an interface invoking service similar to that of a standard file system, for example, initiating an access request, acquiring data, and then returning the data to the application program, etc.

The file access server (FAS) is responsible for interacting with a storage medium in the present file system so as to perform read and write operations on actual data blocks. In response to a data read or write request of the file access client, the FAS reads data from the storage medium and returns the data to the file access client; or reads data from the file access client and writes the data into the storage medium.

The storage medium (i.e. the storage device cluster 1, ..., n in Fig. 1) may be a storage device such as a magnetic disk and a magnetic disk array, which is used for saving the actual data.

In Fig. 1, the metadata is synchronized in real time via FLR_A1 and FLR_A2 which are main and backup (or main and secondary) for each other. The actual data is set to be written into dual copies as a default during the write operation. In this way, it is ensured that no single point of failure exists in the system. In the aspect of disaster tolerance, if a backup FLR and a file access server (FAS) which stores the copy of actual data are simply deployed at location B, when a disaster occurs in location A, although the FLR in location B can switch rapidly to serve as a main FLR, for both metadata and actual data only one copy thereof is left, thus a single point of failure exists, i.e. once a failure occurs in location B, the metadata and actual data will be lost forever.

For the problem in the related technologies that a single point of failure exists in the recovered file system when remote disaster tolerance appears in a distributed system, no effective solution has been proposed at present.

EP 2 330 519 A1 discloses a distributed file system and data block managing method thereof.

### Summary

For the above-mentioned problem that a single point of failure exists in the recovered file system when remote disaster tolerance appears in a distributed system, the embodiments of the present invention provide a distributed file system and a data backup method for the distributed file system so as to at least solve the above-mentioned problem.

According to one embodiment of the present invention, as defined in claim 1, there is provided a distributed file system, the system including a main distributed subsystem located at a first location and a backup distributed subsystem located at a second location, wherein the main distributed subsystem includes a main file location register (FLR), a first file access client (FAC) and a main file access server (FAS); and the backup distributed subsystem includes a backup FLR, a second FAC and a backup FAS, the main distributed subsystem includes at least one first dormant FLR and a first alternate FAS, and the backup distributed subsystem includes at least one second dormant FLR and a second alternate FAS; the at least one first dormant FLR and the at least one second dormant FLR are both used for backing up metadata on the main FLR or the backup FLR; and the first alternate FAS and the second alternate FAS are both used for synchronizing with the main FAS and the backup FAS to perform write operation on current actual data when the first FAC or the second FAC receives a data write operation instruction.

In an example embodiment, the at least one first dormant FLR and the at least one second dormant FLR both include: a dormant communication module configured to back up the metadata on the main FLR or the backup FLR by means of a heartbeat detection communication mode when the main FLR and the backup FLR are normal.

In an example embodiment, the above-mentioned backup FLR includes: a broadcasting module configured to broadcast a main/backup switching message to the at least one first dormant FLR and the at least one second dormant FLR when it is determined that the main FLR is restarted; and the at least one first dormant FLR and the at least one second dormant FLR both include: a timing communication module configured to synchronize the metadata with the backup FLR periodically in accordance with a set period after having received the main/backup switching message.

In an example embodiment, the above-mentioned backup FLR includes: a first detection module configured to detect whether a disaster failure occurs in the main distributed subsystem; and a notification module configured to send a switch-over instruction to the at least one second dormant FLR when a result detected by the first detection module is that a disaster failure occurs in the main distributed subsystem; and the at least one second dormant FLR includes: a restarting module configured to perform restarting after the switch-over instruction has been received; and a real-time synchronization module configured to synchronize the metadata with the backup FLR in real time in a backup state after the restarting.

In an example embodiment, the above-mentioned backup FLR includes: a second detection module configured to detect whether the main FLR has restored to normal; and a notification module configured to send a switching-back instruction to the at least one second dormant FLR when a result detected by the second detection module is that the main FLR has restored to normal; and the at least one second dormant FLR includes: a switching-back module configured to switch the current backup state to a dormant state after the switching-back instruction has been received.

According to another embodiment of the present invention, as defined in claim 6, there is provided a data backup method for a distributed file system, wherein the distributed file system in the method is the above-mentioned distributed file system. The method includes: backing up, by the at least one first dormant FLR and the at least one second dormant FLR, the metadata on the main FLR or the backup FLR; and performing, by the first alternate FAS, the second alternate FAS, the main FAS and the backup FAS synchronously, write operation on current actual data when the first FAC or the second FAC receives a data write operation instruction.

In an example embodiment, the above-mentioned backing up, by the at least one first dormant FLR and the at least one second dormant FLR, the metadata on the main FLR or the backup FLR includes: backing up, by the at least one first dormant FLR and the at least one second dormant FLR, the metadata on the main FLR or the backup FLR by means of a heartbeat detection communication mode when the main FLR and the backup FLR are normal.

In an example embodiment, the above-mentioned backing up, by the at least one first dormant FLR and the at least one second dormant FLR, the metadata on the main FLR or the backup FLR includes: broadcasting, by the backup FLR, a main/backup switching message to the at least one first dormant FLR and the at least one second dormant FLR after having determined that the main FLR is restarted; and synchronizing, by the at least one first dormant FLR and the at least one second dormant FLR, the metadata with the backup FLR periodically in accordance with a set period after having received the main/backup switching message.

In an example embodiment, the above-mentioned backing up, by the at least one first dormant FLR and the at least one second dormant FLR, the metadata on the main FLR or the backup FLR includes: detecting, by the backup FLR, whether a disaster failure occurs in the main distributed subsystem, and upon a detection result that a disaster failure occurs in the main distributed subsystem, sending a switch-over instruction to the at least one second dormant FLR;
restarting, by the at least one second dormant FLR, after having received the switch-over instruction; and synchronizing, by the at least one second dormant FLR, the metadata with the backup FLR in real time in a backup state after the restarting.

In an example embodiment, the above-mentioned backing up, by the at least one first dormant FLR and the at least one second dormant FLR, the metadata on the main FLR or the backup FLR includes: detecting, by the backup FLR, whether the main FLR has restored to normal; and upon a detection result that the main FLR has restored to normal, sending a switching-back instruction to the at least one second dormant FLR; and switching, by the at least one second dormant FLR, the current backup state to a dormant state after having received the switching-back instruction, and backing up the metadata on the main FLR or the backup FLR by means of a heartbeat detection communication mode.

By means of the embodiments of the present invention, through arranging at least one dormant FLR and an alternate FAS in both a main distributed subsystem and a backup distributed subsystem, the number of copies of metadata and actual data can be extended. By means of this backup method, even if a disaster occurs in a machine room where the main distributed subsystem is located, after the backup distributed subsystem is switched to serve as the main distributed subsystem, the at least one dormant FLR in the subsystem can back up the metadata in the subsystem in time and the alternate FAS in the subsystem can back up the written actual data in time. The method solves the problem in the related technologies that a single point of failure exists in the recovered file system when remote disaster tolerance appears in a distributed system, and enhances the reliability and practicality of the system.

### Brief Description of the Drawings

Drawings, provided for further understanding of the present invention and forming a part of the specification, are used to explain the present invention together with embodiments of the present invention rather than to limit the present invention. In the drawings:
Fig. 1 is a schematic diagram of the architecture of a distributed file system according to the related technologies;
Fig. 2 is a block diagram of the structure of a distributed file system according to an embodiment of the present invention;
Fig. 3 is specific structural schematic diagram of a distributed file system according to an embodiment of the present invention;
Fig. 4 is a flowchart of a data backup method for a distributed file system according to an embodiment of the present invention; and
Fig. 5 is a specific flowchart of a data backup method for a distributed file system according to an embodiment of the present invention.

### Detailed Description of the Embodiments

The present invention is described below with reference to the accompanying drawings and embodiments in detail. Note that, the embodiments of the present invention and the features of the embodiments can be combined with each other if there is no conflict.

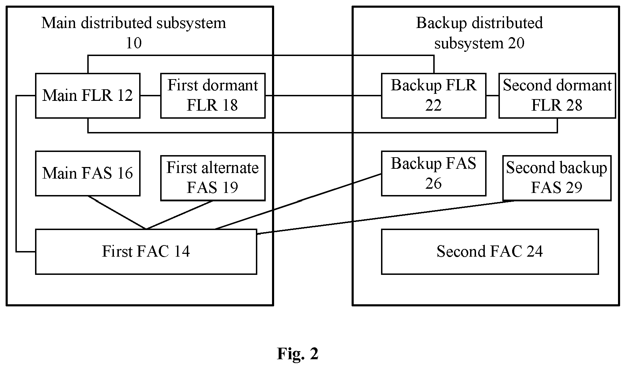

In the embodiments of the present invention, remote backup is performed on both metadata and data of a distributed file system, thus ensuring that a backup machine room can seamlessly switch immediately when a disaster occurs at one location without impacting the current service, and that there is still no single point of failure risk in the switched system. Based on that, an embodiment of the present invention provides a distributed file system. According to the block diagram of the structure of a distributed file system as shown in Fig. 2, the system includes a main distributed subsystem 10 located at a first location and a backup distributed subsystem 20 located at a second location. The main distributed subsystem 10 includes a main FLR 12, a first FAC 14 and a main FAS 16; and the backup distributed subsystem 20 includes a backup FLR 22, a second FAC 24 and a backup FAS 26. What is different from the system shown in Fig. 1, in the embodiment of the present invention, the main distributed subsystem 10 further includes at least one first dormant FLR 18 and a first alternate FAS 19, and the backup distributed subsystem 20 further includes at least one second dormant FLR 28 and a second alternate FAS 29.

The at least one first dormant FLR 18 and the at least one second dormant FLR 28 are both used for backing up metadata on the main FLR 12 or the backup FLR 22.

The first alternate FAS 19 and the second alternate FAS 29 are both used for synchronizing with the main FAS 16 and the backup FAS 26 to perform write operation on current actual data when the first FAC 14 or the second FAC 24 receives a data write operation instruction.

In the present embodiment, through arranging at least one dormant FLR and an alternate FAS in both a main distributed subsystem and a backup distributed subsystem, the number of copies of metadata and actual data can be extended. By means of this backup manner, even if a disaster occurs in a machine room where the main distributed subsystem is located, after the backup distributed subsystem is switched to serve as the main distributed subsystem, the at least one dormant FLR in the subsystem can back up the metadata in the subsystem in time and the alternate FAS in the subsystem can back up the written actual data in time. The embodiment solves the problem in the related technologies that a single point of failure exists in the recovered file system when remote disaster tolerance appears in a distributed system, and enhances the reliability and practicality of the system.

In the present embodiment, the at least one first dormant FLR 18 and the at least one second dormant FLR 28 are both in the dormant state when the main FLR 12 and the backup FLR 22 are normal. Based on that, the at least one first dormant FLR 18 and the at least one second dormant FLR 28 both include: a dormant communication module configured to back up the metadata on the main FLR 12 or the backup FLR 22 by means of a heartbeat detection communication mode when the main FLR 12 and the backup FLR 22 are normal. In this way, the number of times of information interaction can be reduced and the electric power consumption of the system can be reduced.

In the running process of the distributed file system, the main FLR 12 may be restarted due to some certain reasons. In order not to influence the normal running of the service, the backup FLR 22 of the present embodiment includes: a broadcasting module configured to broadcast a main/backup switching message to the at least one first dormant FLR 18 and the at least one second dormant FLR 28 when it is determined that the main FLR 12 is restarted. The at least one first dormant FLR 18 and the at least one second dormant FLR 28 both include: a timing communication module configured to synchronize the metadata with the backup FLR 22 periodically in accordance with a set period after having received the main/backup switching message.

With regard to a disaster occurring at the first location, for example, a fire disaster or a water disaster, which causes the main distributed subsystem 10 to break down, in the present embodiment, this situation is called a disaster failure occurring in the main distributed subsystem. In order to ensure the smooth progress of the service in this situation, in the present embodiment, the backup FLR 22 includes: a first detection module configured to detect whether a disaster failure occurs in the main distributed subsystem; and a notification module connected to the first detection module and configured to send a switch-over instruction to the at least one second dormant FLR 28 when a result detected by the first detection module is that a disaster failure occurs in the main distributed subsystem. The at least one second dormant FLR 28 includes: a restarting module configured to perform restarting after the switch-over instruction has been received; and a real-time synchronization module connected to the restarting module and configured to synchronize the metadata with the backup FLR 22 in real time in a backup state after the restarting.

When the main distributed subsystem 10 in which a disaster failure occurs restores to normal, the main FLR 12 in the system sends a message to the backup FLR 22, so that the backup FLR 22 can detect whether the main FLR has restored to normal and then adjust the state of the above-mentioned at least one dormant FLR, enabling the system to be more power saving. Based on that, the above-mentioned backup FLR 22 includes: a second detection module configured to detect whether the main FLR 12 has restored to normal; and a notification module connected to the second detection module and configured to send a switching-back instruction to the at least one second dormant FLR 28 when a result detected by the second detection module is that the main FLR has restored to normal. Accordingly, the at least one second dormant FLR 28 includes: a switching-back module configured to switch the current backup state to a dormant state after the above-mentioned switching-back instruction has been received.

From the above-mentioned embodiment, it can be seen that the dormant FLRs in the present embodiment are different from the original main and backup FLRs. Usually, the server only communicates with the main FLR by means of heartbeat detection. Once all the servers at the location where the main distributed subsystem is located are damaged due to the occurrence of a disaster, the dormant FLR at the location where the backup distributed subsystem is located will receive an instruction sent from the main FLR after the switching, restart and load the metadata to become a backup FLR. With regard to the storage of the actual data, in order to enhance the system reliability, in the present embodiment, a dual-copy designated node storage algorithm is adopted, i.e. in the case of default dual copies, four copies are arranged in a disaster tolerance backup, and data of the other two copies are all stored in a machine room at the location where the backup distributed subsystem is located. In this way, it is ensured that there are still two copies of data of the backup distributed subsystem when a disaster occurs in the main distributed subsystem.

In the above embodiment of the present invention, with regard to the number of dormant FLRs, only the case where each subsystem has one dormant FLR is taken as an example for illustration, but during actual implementation the number of the dormant FLR is not limited to one and may be increased as required. By the same reasoning, the backup distributed subsystem is also not limited to one and can be respectively deployed at a plurality of locations as required.

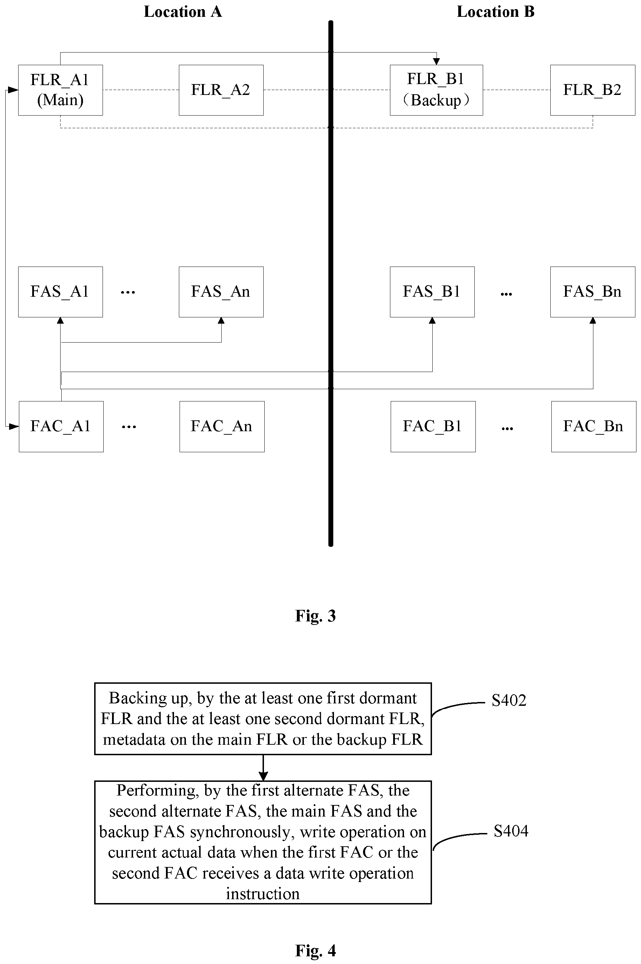

The specific structural schematic diagram of a distributed file system shown in Fig. 3 is taken as an example for illustration below, where each device at location A belongs to a main distributed subsystem and each device at location B belongs to a backup distributed subsystem. The system shown in Fig. 3 is an improvement on the basis of that of Fig. 1. The system shown in Fig. 3 includes but not limited to the following main improvements.

### I. The remote backup of the FLR and the metadata

An extension is performed from the original two FLR servers to four FLR servers. There is only one main FLR and one secondary FLR (all called backup FLR) in the original architecture in Fig. 1, which are FLR_A1 and FLR_B1 in Fig. 3. In the present embodiment, the other two added FLRs are named dormant state FLRs, or FLRs in a dormant state. The FLRs in the dormant state communicate with the main FLR periodically. Given that there are FLR_A1 (the main FLR) and FLRA2 (the FLR in the dormant state) at location A, and there are FLR_B1 (the secondary FLR) and FLR_B2 (the FLR in the dormant state) at location B, the changes in the state of the four FLRs are divided into the following types.
1. The FLR_A1 at location A is restarted: the switchover between the main FLR and the backup FLR is performed, then the FLR_B1 changes to serve as the main FLR and broadcasts information to the FLR_A2 and FLR_B2 which are in the dormant state, and afterwards, the FLR_A2 and FLR_B2 starts to periodically perform heartbeat communications with the FLR_B1 instead.
2. The FLR in the dormant state at location A or location B is restarted, the original procedure does not change.
3. The secondary FLR at location B is restarted: the procedure does not change.
4. A disaster occurs in the machine room at location A. In this case, firstly, the secondary FLR at location B switches over to serve as a main FLR. If the main FLR at location B discovers that neither of two FLRs at location A works, and a storage node (for example, an FAS) at location A has no heartbeat report, it is considered that a disaster occurs at location A, then the FLR_B1 serving as the main FLR sends an instruction for switchover to a secondary FLR to the FLR_B2. After the FLR_B2 restarts an edition software, the state of the FLR_B2 changes to serve as the secondary FLR, and is in real-time synchronization with the main FLR.
5. The machine room at location A recovers after the disaster. In this case, the FLR_A1 sends a heartbeat to the FLR_B1 at location B. The FLR_B1 sends an instruction for switching the state of the FLR_B2 to the dormant state after having detected the heartbeat, and the state of the FLR_A1 changes into the secondary FLR after restarting successfully. The FLR_A2 is still in the dormant state, thus returning back to the initial state.

### II. The remote backup of the FAS and actual data

The system shown in Fig. 3 is provided with a remote disaster tolerance switch. After the remote disaster tolerance switch is opened, the number of copies changes from two to four, and a magnetic disk storage strategy of a database module of the distributed file system changes from the original totally random storage to in-group totally random storage after grouping (the copies are stored in accordance with two groups of location A and location B, and the number of copies stored in each group is two), which not only ensures that each data block has two copies at each of the location A and location B but also ensures that the copies of the data blocks are distributed evenly at both location A and location B.

The embodiments of the present invention also provide a data backup method for a distributed file system. The distributed file system may be the distributed file system as shown above. With reference to the flowchart of a data backup method for a distributed file system shown in Fig. 4, the method includes the steps of:
step S402, backing up, by the at least one first dormant FLR and the at least one second dormant FLR, metadata on the main FLR or the backup FLR; and
step S404, performing, by the first alternate FAS, the second alternate FAS, the main FAS and the backup FAS synchronously, write operation on current actual data when the first FAC or the second FAC receives a data write operation instruction.

In the present embodiment, by means of at least one dormant FLR and an alternate FAS arranged in both a main distributed subsystem and a backup distributed subsystem, the number of copies of metadata and actual data can be extended. By means of this backup method, even if a disaster occurs in a machine room where the main distributed subsystem is located, after the backup distributed subsystem is switched to serve as the main distributed subsystem, the at least one dormant FLR in the subsystem can back up the metadata in the subsystem in time and the alternate FAS in the subsystem can back up the written actual data in time. This embodiment solves the problem in the related technologies that a single point of failure exists in the recovered file system when remote disaster tolerance appears in a distributed system, and enhances the reliability and practicality of the system.

When the main FLR and the backup FLR are normal, the above-mentioned at least one first dormant FLR and at least one second dormant FLR may back up metadata on the main FLR or the backup FLR by means of a heartbeat detection communication mode. In this way, the number of times of signalling interaction can be reduced, thus enabling the system to be more power saving.

In the present embodiment, if the backup FLR determines that the main FLR is restarted, the backup FLR may broadcast a main/backup switching message to the at least one first dormant FLR and the at least one second dormant FLR, so that the at least one first dormant FLR and the at least one second dormant FLR synchronize the metadata with the backup FLR periodically in accordance with a set period after having received the main/backup switching message. In this way, it is possible to enable the dormant FLRs to perform metadata synchronization more timely, thus enhancing the security of the system.

After the main FLR is restarted, the backup FLR detects whether a disaster failure occurs in the main distributed subsystem, and upon a detection result that a disaster failure occurs in the main distributed subsystem, a switch-over instruction is sent to the at least one second dormant FLR; the at least one second dormant FLR is restarted after having received the switch-over instruction; and the at least one second dormant FLR synchronizes the metadata with the backup FLR in real time in a backup state after the restarting. In this case, since a disaster failure occurs in the main distributed subsystem, the backup of metadata can only rely on the second dormant FLR, and thus by changing the at least one second dormant FLR from the dormant state to the backup state, the timeliness of metadata synchronization can be improved and the security of data can be enhanced.

In the present embodiment, the backup FLR detects whether the main FLR has restored to normal; and upon a detection result that the main FLR has restored to normal, sending a switching-back instruction to the at least one second dormant FLR; and the at least one second dormant FLR switches the current backup state to the dormant state after having received the switching-back instruction, and backs up metadata on the main FLR or the backup FLR by means of a heartbeat detection communication mode, so that the power consumption of the system is comparatively small.

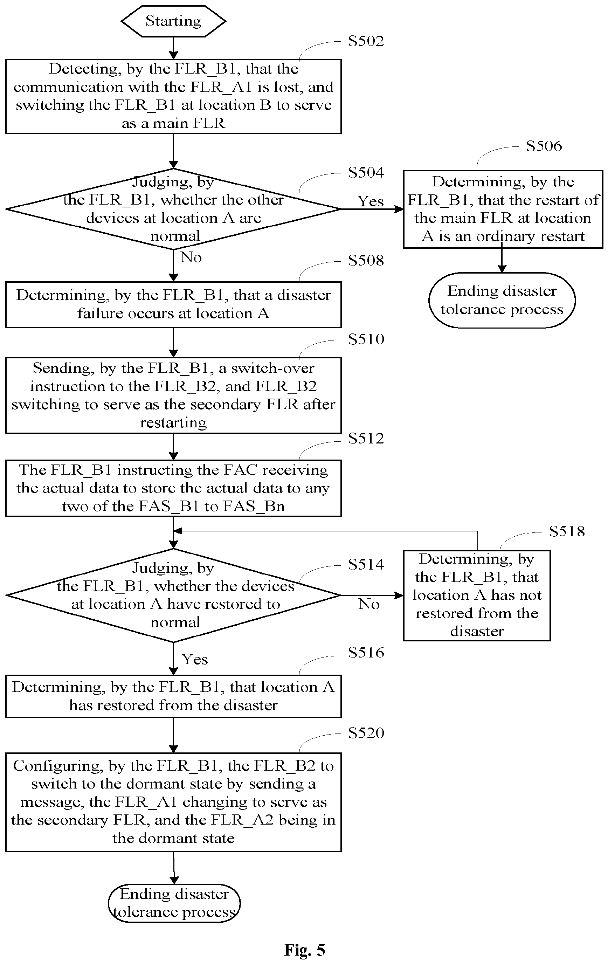

The system shown in Fig. 3 is taken as an example, Fig. 5 of the present embodiment provides a specific flowchart of a data backup method for the distributed file system, the method including the steps of:
step S502, detecting, by the FLR_B1, that the communication with the FLR_A1 is lost, and switching the FLR_B1 at location B to serve as a main FLR;
step S504, judging, by the FLR_B1, whether the other devices at location A are normal, and if so, executing step S506; otherwise, executing step S508;
step S506, determining, by the FLR_B1, that the restart of the main FLR at location A is an ordinary restart, then ending the disaster tolerance process;
step S508, determining, by the FLR_B1, that a disaster failure occurs at location A, then executing step S510;
step S510, sending, by the FLR_B1, a switch-over instruction to the FLR_B2, and FLR_B2 switching to serve as the secondary FLR after restarting;
step S512, the FLR_B1 instructing the FAC receiving the actual data to store the actual data to any two of the FAS_B1 to FAS_Bn, for example, FAS_B1 and FAS_B2, and the number of copies of the actual data being two;
step S514, judging, by the FLR_B1, whether the devices at location A have restored to normal, and if so, executing step S516; otherwise, executing step S518;
step S516, determining, by the FLR_B1, that location A has restored from the disaster, then executing step S520;
step S518, determining, by the FLR_B1, that location A has not restored from the disaster, returning to step S514, and the FLR_B1 continuing to detect whether the devices at location A have restored to normal; and
step S520, configuring, by the FLR_B1, the FLR_B2 to switch to the dormant state by sending a message, the FLR_A1 changing to serve as the secondary FLR, and the FLR_A2 being in the dormant state; at that moment, the number of stored copies of the actual data being four; and ending the disaster tolerance process.

Based on the system architecture shown in Fig. 1, in order to implement the above-mentioned embodiments of the present invention, the following method can be adopted for implementation.
1) The address of an FLR at location B is added on network management and the attribute is configured to be a secondary FLR state or a dormant state.
2) The disaster tolerance backup switch is opened on the network management interface, and the number of copies changes from two to four.
3) A grouping selection strategy of a magnetic disk is configured on the network management.
4) All of the edition programs are restarted on the network management.

The marker for the successful disaster tolerance configuration may be as follows: it can be seen on the display interface that the states of the four FLRs are respectively main, dormant, backup and dormant, and the number of copies is four; the backup of any data block has two pieces at each of location A and location B when it is queried. By means of this configuration method, after a disaster occurs at location A, the disaster tolerance backup mechanism of the distributed file system can rapidly recover at location B, and there is still no single point of failure at the recovered file system, i.e. the metadata and actual data still have two copies at location B.

From the above description, it can be seen that, compared with an ordinary disaster tolerance backup, the above-mentioned embodiments not only make full use of the original backup mechanism of the distributed file system but also implement dual-copy backup of the metadata and actual data in the condition of a disaster. The embodiments can fully meet the disaster tolerance requirements of the distributed file system and can achieve the effect of not influencing the service during the real-time backup and switch of the metadata and data, thereby improving the level of the security of the distributed file system, and thus being better applicable to a distributed file system with a metadata sever.

### Industrial Applicability

The technical solutions provided in the present invention can make full use of the original backup mechanism of the distributed file system and implement dual-copy backup of the metadata and actual data in the condition of a disaster, and can achieve the effect of not influencing the service during the real-time backup and switch of the metadata and data, and thus can be applicable to a distributed file system with a metadata sever.

Obviously, those skilled in the art should know that each of the mentioned modules or steps of the present invention can be realized by universal computing devices; the modules or steps can be focused on single computing device, or distributed on the network formed by multiple computing devices; selectively, they can be realized by the program codes which can be executed by the computing device; thereby, the modules or steps can be stored in the storage device and executed by the computing device; and under some circumstances, the shown or described steps can be executed in different orders, or can be independently manufactured as each integrated circuit module, or multiple modules or steps thereof can be manufactured to be single integrated circuit module. In this way, the present invention is not restricted to any particular hardware and software combination.

The descriptions above are only the preferable embodiment of the present invention, which are not used to restrict the present invention, for those skilled in the art, the present invention may have various changes and variations. Any amendments, equivalent substitutions, improvements, etc. within the principle of the present invention are all included in the scope of the protection defined by the claims of the present invention.

## Claims

1. A distributed file system, comprising: a main distributed subsystem (10) located at a first location and a backup distributed subsystem (20) located at a second location, wherein the main distributed subsystem (10) comprises a main file location register (FLR), a first file access client (FAC) and a main file access server (FAS); and the backup distributed subsystem (20) comprises a backup FLR (22), a second FAC (24) and a backup FAS (26), **characterized in that** the main distributed subsystem (10) comprises at least one first dormant FLR (18) and a first alternate FAS (19), and the backup distributed subsystem (20) comprises at least one second dormant FLR (28) and a second alternate FAS (29);
the at least one first dormant FLR (18) and the at least one second dormant FLR (28) are both used for backing up metadata on the main FLR (12) or the backup FLR (22); and
the first alternate FAS (19) and the second alternate FAS (29) are both used for synchronizing with the main FAS (16) and the backup FAS (26) to perform write operation on current actual data when the first FAC (14) or the second FAC (24) receives a data write operation instruction.

2. The distributed file system according to claim 1, **characterized in that** the at least one first dormant FLR (18) and the at least one second dormant FLR (28) both comprise: a dormant communication module configured to back up the metadata on the main FLR (12) or the backup FLR (22) by means of a heartbeat detection communication mode when the main FLR (12) and the backup FLR (22) are normal.

3. The distributed file system according to claim 1, **characterized in that**
the backup FLR (22) comprises: a broadcasting module configured to broadcast a main/backup switching message to the at least one first dormant FLR (18) and the at least one second dormant FLR (28) when it is determined that the main FLR (12) is restarted; and
the at least one first dormant FLR (18) and the at least one second dormant FLR (28) both comprise: a timing communication module configured to synchronize the metadata with the backup FLR (22) periodically in accordance with a set period after having received the main/backup switching message.

4. The distributed file system according to claim 1, **characterized in that**
the backup FLR (22) comprises: a first detection module configured to detect whether a disaster failure occurs in the main distributed subsystem (10); and a notification module configured to send a switch-over instruction to the at least one second dormant FLR (28) when a result detected by the first detection module is that a disaster failure occurs in the main distributed subsystem (10); and
the at least one second dormant FLR (28) comprises: a restarting module configured to perform restarting after the switch-over instruction has been received; and a real-time synchronization module configured to synchronize the metadata with the backup FLR (22) in real time in a backup state after the restarting.

5. The distributed file system according to claim 4, **characterized in that**
the backup FLR (22) comprises: a second detection module configured to detect whether the main FLR (12) has restored to normal; and a notification module configured to send a switching-back instruction to the at least one second dormant FLR (28) when a result detected by the second detection module is that the main FLR (12) has restored to normal; and
the at least one second dormant FLR (28) comprises: a switching-back module configured to switch the current backup state to a dormant state after the switching-back instruction has been received.

6. A data backup method for a distributed file system as claimed in any one of claims 1-5, **characterized in that** the method comprises:
backing up (S402), by the at least one first dormant FLR (18) and the at least one second dormant FLR (28), the metadata on the main FLR (12) or the backup FLR (22); and
performing (S404), by the first alternate FAS (19), the second alternate FAS (29), the main FAS (16) and the backup FAS (26) synchronously, write operation on current actual data when the first FAC (14) or the second FAC (24) receives a data write operation instruction.

7. The method according to claim 6, **characterized in that** backing up, by the at least one first dormant FLR (18) and the at least one second dormant FLR (28), the metadata on the main FLR (12) or the backup FLR (22) comprises: backing up, by the at least one first dormant FLR (18) and the at least one second dormant FLR (28), the metadata on the main FLR (12) or the backup FLR (22) by means of a heartbeat detection communication mode when the main FLR (12) and the backup FLR (22) are normal.

8. The method according to claim 6, **characterized in that** backing up, by the at least one first dormant FLR (18) and the at least one second dormant FLR (28), the metadata on the main FLR (12) or the backup FLR (22) comprises:
broadcasting, by the backup FLR (22), a main/backup switching message to the at least one first dormant FLR (18) and the at least one second dormant FLR (28) after having determined that the main FLR (12) is restarted; and
synchronizing, by the at least one first dormant FLR (18) and the at least one second dormant FLR (28), the metadata with the backup FLR (22) periodically in accordance with a set period after having received the main/backup switching message.

9. The method according to claim 6, **characterized in that** backing up, by the at least one first dormant FLR (18) and the at least one second dormant FLR (28), the metadata on the main FLR (12) or the backup FLR (22) comprises:
detecting, by the backup FLR (22), whether a disaster failure occurs in the main distributed subsystem (10); and upon a detection result that a disaster failure occurs in the main distributed subsystem (10), sending a switch-over instruction to the at least one second dormant FLR (28);
restarting, by the at least one second dormant FLR (28), after having received the switch-over instruction; and
synchronizing, by the at least one second dormant FLR (28), the metadata with the backup FLR (22) in real time in a backup state after the restarting.

10. The method according to claim 9, **characterized in that** backing up, by the at least one first dormant FLR (18) and the at least one second dormant FLR (28), the metadata on the main FLR (12) or the backup FLR (22) comprises:
detecting, by the backup FLR (22), whether the main FLR (12) has restored to normal; and upon a detection result that the main FLR (12) has restored to normal, sending a switching-back instruction to the at least one second dormant FLR (28); and
switching, by the at least one second dormant FLR (28), the current backup state to a dormant state after having received the switching-back instruction, and backing up the metadata on the main FLR (12) or the backup FLR (22) by means of a heartbeat detection communication mode.

## Patentansprüche

1. Verteiltes Dateisystem, welches Folgendes umfasst: ein verteiltes Haupt-Subsystem (10), das sich an einem ersten Standort befindet, und ein verteiltes Backup-Subsystem (20), das sich an einem zweiten Standort befindet, wobei das verteilte Haupt-Subsystem (10) ein Haupt-Dateistandortverzeichnis (FLR), einen ersten Dateizugriffs-Client (FAC) und einen Haupt-Dateizugriffsserver (FAS) umfasst; und das verteilte Backup-Subsystem (20) ein Backup-FLR (22), einen zweiten FAC (24) und einen Backup-FAS (26) umfasst, **dadurch gekennzeichnet, dass** das verteilte Haupt-Subsystem (10) mindestens ein erstes ruhendes FLR (18) und einen ersten alternativen FAS (19) umfasst, und das verteilte Backup-Subsystem (20) mindestens ein zweites ruhendes FLR (28) und einen zweiten alternativen FAS (29) umfasst;
wobei das mindestens eine erste ruhende FLR (18) und das mindestens eine zweite ruhende FLR (28) beide zum Sichern von Metadaten auf dem Haupt-FLR (12) oder dem Backup-FLR (22) genutzt werden; und
der erste alternative FAS (19) und der zweite alternative FAS (29) beide zum Synchronisieren mit dem Haupt-FAS (16) und dem Backup-FAS (26) genutzt werden, um einen Schreibvorgang an aktuellen tatsächlichen Daten auszuführen, wenn der erste FAC (14) oder der zweite FAC (24) einen Befehl für einen Datenschreibvorgang erhält.

2. Verteiltes Dateisystem nach Anspruch 1, **dadurch gekennzeichnet, dass** das mindestens eine erste ruhende FLR (18) und das mindestens eine zweite ruhende FLR (28) beide Folgendes umfassen: ein ruhendes Kommunikationsmodul, welches dazu konfiguriert ist, die Metadaten auf dem Haupt-FLR (12) oder dem Backup-FLR (22) mittels eines Heartbeat-Erkennungs-/Kommunikationsmodus zu sichern, wenn sich das Haupt-FLR (12) und das Backup-FLR (22) im normalen Zustand befinden.

3. Verteiltes Dateisystem nach Anspruch 1, **dadurch gekennzeichnet, dass**
das Backup-FLR (22) Folgendes umfasst: ein Broadcasting-Modul, welches dazu konfiguriert ist, eine Haupt-/Backup-Schaltnachricht an das mindestens eine erste ruhende FLR (18) und das mindestens eine zweite ruhende FLR (28) auszusenden, wenn festgestellt wird, dass das Haupt-FLR (12) neu gestartet wird; und
das mindestens eine erste ruhende FLR (18) und das mindestens eine zweite ruhende FLR (28) beide Folgendes umfassen: ein Timing-/Kommunikationsmodul, welches dazu konfiguriert ist, die Metadaten, nachdem die Haupt-/Backup-Schaltnachricht empfangen wurde, regelmäßig entsprechend einem festgelegten Zeitraum mit dem Backup-FLR (22) zu synchronisieren.

4. Verteiltes Dateisystem nach Anspruch 1, **dadurch gekennzeichnet, dass**
das Backup-FLR (22) Folgendes umfasst: ein erstes Erkennungsmodul, welches dazu konfiguriert, ist zu erkennen, ob ein katastrophenbedingter Ausfall in dem verteilten Haupt-Subsystem (10) auftritt; und ein Benachrichtigungsmodul, welches dazu konfiguriert ist, einen Umschaltbefehl an das mindestens eine zweite ruhende FLR (28) zu senden, wenn ein von dem ersten Erkennungsmodul erkanntes Ergebnis lautet, dass ein katastrophenbedingter Ausfall in dem verteilten Haupt-Subsystem (10) auftritt; und
das mindestens eine zweite ruhende FLR (28) Folgendes umfasst: ein Neustartmodul, welches dazu konfiguriert ist, einen Neustart auszuführen, nachdem der Umschaltbefehl empfangen wurde; und ein Echtzeit-Synchronisationsmodul, welches dazu konfiguriert ist, nach dem Neustart in einem Backup-Status die Metadaten in Echtzeit mit dem Backup-FLR (22) zu synchronisieren.

5. Verteiltes Dateisystem nach Anspruch 4, **dadurch gekennzeichnet, dass**
das Backup-FLR (22) Folgendes umfasst: ein zweites Erkennungsmodul, welches dazu konfiguriert ist, zu erkennen, ob das Haupt-FLR (12) in den normalen Zustand zurückgekehrt ist; und ein Benachrichtigungsmodul, welches dazu konfiguriert ist, einen Rückschaltbefehl an das mindestens eine zweite ruhende FLR (28) zu senden, wenn ein von dem zweiten Erkennungsmodul erkanntes Ergebnis lautet, dass das Haupt-FLR (12) in den normalen Zustand zurückgekehrt ist; und
das mindestens eine zweite ruhende FLR (28) Folgendes umfasst: ein Rückschaltmodul, welches dazu konfiguriert ist, den aktuellen Backup-Status in einen Ruhestatus zu schalten, nachdem der Rückschaltbefehl empfangen wurde.

6. Datenbackup-Verfahren für ein verteiltes Dateisystem nach einem der Ansprüche 1 bis 5, **dadurch gekennzeichnet, dass** das Verfahren Folgendes umfasst:
Sichern (S402) der Metadaten auf dem Haupt-FLR (12) oder dem Backup-FLR (22) durch das mindestens eine erste ruhende FLR (18) und das mindestens eine zweite ruhende FLR (28); und
synchrones Ausführen (S404) eines Schreibvorgangs an aktuellen tatsächlichen Daten durch den ersten alternativen FAS (19), den zweiten alternativen FAS (29), den Haupt-FAS (16) und den Backup-FAS (26), wenn der erste FAC (14) oder der zweite FAC (24) einen Befehl für einen Datenschreibvorgang erhält.

7. Verfahren nach Anspruch 6, **dadurch gekennzeichnet, dass** das Sichern der Metadaten auf dem Haupt-FLR (12) oder dem Backup-FLR (22) durch das mindestens eine erste ruhende FLR (18) und das mindestens eine zweite ruhende FLR (28) Folgendes umfasst: Sichern der Metadaten auf dem Haupt-FLR (12) oder dem Backup-FLR (22) durch das mindestens eine erste ruhende FLR (18) und das mindestens eine zweite ruhende FLR (28) mittels eines Heartbeat-Erkennungs-/Kommunikationsmodus, wenn sich das Haupt-FLR (12) und das Backup-FLR (22) im normalen Zustand befinden.

8. Verfahren nach Anspruch 6, **dadurch gekennzeichnet, dass** das Sichern der Metadaten auf dem Haupt-FLR (12) oder dem Backup-FLR (22) durch das mindestens eine erste ruhende FLR (18) und das mindestens eine zweite ruhende FLR (28) Folgendes umfasst:
Aussenden, durch das Backup-FLR (22), einer Haupt-/Backup-Schaltnachricht an das mindestens eine erste ruhende FLR (18) und das mindestens eine zweite ruhende FLR (28), nachdem festgestellt wurde, dass das Haupt-FLR (12) neu gestartet wird; und
regelmäßiges Synchronisieren, durch das mindestens eine erste ruhende FLR (18) und das mindestens eine zweite ruhende FLR (28), der Metadaten mit dem Backup-FLR (22) entsprechend einem festgelegten Zeitraum, nachdem die Haupt-/Backup-Schaltnachricht empfangen wurde.

9. Verfahren nach Anspruch 6, **dadurch gekennzeichnet, dass** das Sichern der Metadaten auf dem Haupt-FLR (12) oder dem Backup-FLR (22) durch das mindestens eine erste ruhende FLR (18) und das mindestens eine zweite ruhende FLR (28) Folgendes umfasst:
Erkennen, durch das Backup-FLR (22), ob ein katastrophenbedingter Ausfall in dem verteilten Haupt-Subsystem (10) auftritt; und bei einem Erkennungsergebnis, dass ein katastrophenbedingter Ausfall in dem verteilten Haupt-Subsystem (10) auftritt, Senden eines Umschaltbefehls an das mindestens eine zweite ruhende FLR (28);
Neustarten, durch das mindestens eine zweite ruhende FLR (28), nachdem der Umschaltbefehl empfangen wurde; und
Synchronisieren, durch das mindestens eine zweite ruhende FLR (28), der Metadaten mit dem Backup-FLR (22) in Echtzeit in einem Backup-Status nach dem Neustart.

10. Verfahren nach Anspruch 9, **dadurch gekennzeichnet, dass** das Sichern der Metadaten auf dem Haupt-FLR (12) oder dem Backup-FLR (22) durch das mindestens eine erste ruhende FLR (18) und das mindestens eine zweite ruhende FLR (28) Folgendes umfasst:
Erkennen, durch das Backup-FLR (22), ob das Haupt-FLR (12) in den normalen Zustand zurückgekehrt ist; und bei einem Erkennungsergebnis, dass das Haupt-FLR (12) in den normalen Zustand zurückgekehrt ist, Senden eines Rückschaltbefehls an das mindestens eine zweite ruhende FLR (28); und
Schalten, durch das mindestens eine zweite ruhende FLR (28), des aktuellen Backup-Status in einen Ruhestatus, nachdem der Rückschaltbefehl empfangen wurde, und Sichern der Metadaten auf dem Haupt-FLR (12) oder dem Backup-FLR (22) mittels eines Heartbeat-Erkennungs-/Kommunikationsmodus.

## Revendications

1. Système de fichiers distribué comprenant : un sous-système distribué principal (10) situé dans un premier emplacement et un sous-système distribué de sauvegarde (20) situé dans un deuxième emplacement, dans lequel le sous-système distribué principal (10) comprend un registre de localisation de fichier (FLR) principal, un premier client d'accès aux fichiers (FAC) et un serveur d'accès aux fichiers (FAS) principal ; et le sous-système distribué de sauvegarde (20) comprend un FLR de sauvegarde (22), un deuxième FAC (24) et un FAS de sauvegarde (26), **caractérisé en ce que** le sous-système distribué principal (10) comprend au moins un premier FLR inactif (18) et un premier FAS auxiliaire (19) et le sous-système distribué de sauvegarde (20) comprend au moins un deuxième FLR inactif (28) et un deuxième FAS auxiliaire (29) ;
l'au moins un premier FLR inactif (18) et l'au moins un deuxième FLR inactif (28) sont tous deux utilisés pour sauvegarder des métadonnées sur le FLR principal (12) ou le FLR de sauvegarde (22) ; et
le premier FAS auxiliaire (19) et le deuxième FAS auxiliaire (29) sont tous deux utilisés pour une synchronisation avec le FAS principal (16) et le FAS de sauvegarde (26) pour effectuer une opération d'écriture sur des données réelles actuelles quand le premier FAC (14) ou le deuxième FAC (24) reçoivent une instruction d'opération d'écriture de données.

2. Système de fichiers distribué selon la revendication 1, **caractérisé en ce que** l'au moins un premier FLR inactif (18) et l'au moins un deuxième FLR inactif (28) comprennent tous deux : un module de communication inactif configuré pour sauvegarder les métadonnées sur le FLR principal (12) ou le FLR de sauvegarde (22) au moyen d'un mode de communication de détection de collision quand le FLR principal (12) et le FLR de sauvegarde (22) sont normaux.

3. Système de fichiers distribué selon la revendication 1, **caractérisé en ce que**
le FLR de sauvegarde (22) comprend : un module de diffusion configuré pour diffuser un message de commutation principal/sauvegarde à l'au moins un premier FLR inactif (18) et l'au moins un deuxième FLR inactif (28) quand il est déterminé que le FLR principal (12) est redémarré ; et
l'au moins un premier FLR inactif (18) et l'au moins un deuxième FLR inactif (28) comprennent tous deux : un module de communication de synchronisation configuré pour synchroniser les métadonnées avec le FLR de sauvegarde (22) périodiquement conformément à une période définie après avoir reçu le message de commutation principal/sauvegarde.

4. Système de fichiers distribué selon la revendication 1, **caractérisé en ce que**
le FLR de sauvegarde (22) comprend : un premier module de détection configuré pour détecter si une défaillance catastrophique se produit dans le sous-système distribué principal (10) ; et un module de notification configuré pour envoyer une instruction de commutation à l'au moins un deuxième FLR inactif (28) quand un résultat détecté par le premier module de détection est qu'une défaillance catastrophique s'est produite dans le sous-système distribué principal (10) ; et
l'au moins un deuxième FLR inactif (28) comprend : un module de redémarrage configuré pour effectuer un redémarrage après que l'instruction de commutation a été reçue ; et un module de synchronisation en temps réel configuré pour synchroniser les métadonnées avec le FLR de sauvegarde (22) en temps réel dans un état de sauvegarde après le redémarrage.

5. Système de fichiers distribué selon la revendication 4, **caractérisé en ce que**
le FLR de sauvegarde (22) comprend : un deuxième module de détection configuré pour détecter si le FLR principal (12) est retourné à normal ; et un module de notification configuré pour envoyer une instruction de commutation en retour à l'au moins un deuxième FLR inactif (28) quand un résultat détecté par le deuxième module de détection est que le FLR principal (12) est retourné à normal ; et
l'au moins un deuxième FLR inactif (28) comprend : un module de commutation en retour pour commuter l'état de sauvegarde actuel à un état inactif après que l'instruction de commutation en retour a été reçue.

6. Procédé de sauvegarde de données pour un système de fichiers distribué selon l'une quelconque des revendications 1 à 5, **caractérisé en ce que** le procédé comprend :
la sauvegarde (S402), par l'au moins un premier FLR inactif (18) et l'au moins un deuxième FLR inactif (28), des métadonnées sur le FLR principal (12) ou le FLR de sauvegarde (22) ; et
l'exécution (S404), par le premier FAS auxiliaire (19), le deuxième FAS auxiliaire (29), le FAS principal (16) et le FAS de sauvegarde (26) de manière synchronisée, une opération d'écriture sur des données réelles actuelles quand le premier FAC (14) ou le deuxième FAC (24) reçoivent une instruction d'opération d'écriture de données.

7. Procédé selon la revendication 6, **caractérisé en ce que** la sauvegarde, par l'au moins un premier FLR inactif (18) et l'au moins un deuxième FLR inactif (28), des métadonnées sur le FLR principal (12) ou le FLR de sauvegarde (22) comprend : la sauvegarde, par l'au moins un premier FLR inactif (18) et l'au moins un deuxième FLR inactif (28), des métadonnées sur le FLR principal (12) ou le FLR de sauvegarde (22) au moyen d'un mode de communication de détection de collision quand le FLR principal (12) et le FLR de sauvegarde (22) sont normaux.

8. Procédé selon la revendication 6, **caractérisé en ce que** la sauvegarde, par l'au moins un premier FLR inactif (18) et l'au moins un deuxième FLR inactif (28), des métadonnées sur le FLR principal (12) ou le FLR de sauvegarde (22) comprend :
la diffusion, par le FLR de sauvegarde (22), d'un message de commutation principal/sauvegarde à l'au moins un premier FLR inactif (18) et l'au moins un deuxième FLR inactif (28) après avoir déterminé que le FLR principal (12) est redémarré ; et
la synchronisation, par l'au moins un premier FLR inactif (18) et l'au moins un deuxième FLR inactif (28), des métadonnées avec le FLR de sauvegarde (22) périodiquement conformément à une période définie après avoir reçu le message de commutation principal/sauvegarde.

9. Procédé selon la revendication 6, **caractérisé en ce que** la sauvegarde, par l'au moins un premier FLR inactif (18) et l'au moins un deuxième FLR inactif (28), des métadonnées sur le FLR principal (12) ou le FLR de sauvegarde (22) comprend :
la détection, par le FLR de sauvegarde (22), du fait qu'une défaillance catastrophique se produit dans le sous-système distribué principal (10) ; et, lors d'un résultat de détection indiquant qu'une défaillance catastrophique s'est produite dans le sous-système distribué principal (10), l'envoi d'une instruction de commutation à l'au moins un deuxième FLR inactif (28) ;
le redémarrage, par l'au moins un deuxième FLR inactif (28), après avoir reçu l'instruction de commutation ; et
la synchronisation, par l'au moins un deuxième FLR inactif (28), des métadonnées avec le FLR de sauvegarde (22) en temps réel dans un état de sauvegarde après le redémarrage.

10. Procédé selon la revendication 9, **caractérisé en ce que** la sauvegarde, par l'au moins un premier FLR inactif (18) et l'au moins un deuxième FLR inactif (28), des métadonnées sur le FLR principal (12) ou le FLR de sauvegarde (22) comprend :
la détection, par le FLR de sauvegarde (22), du fait que le FLR principal (12) est retourné à normal ; et, lors d'un résultat de détection indiquant que le FLR principal (12) est retourné à normal, l'envoi d'une instruction de commutation en retour à l'au moins un deuxième FLR inactif (28) ; et
la commutation, par l'au moins un deuxième FLR inactif (28), de l'état de sauvegarde actuel à un état inactif après avoir reçu l'instruction de commutation en retour, et la sauvegarde des métadonnées sur le FLR principal (12) ou le FLR de sauvegarde (22) au moyen d'un mode de communication de détection de collision.
